# EUROPEAN PATENT SPECIFICATION

(11) **EP 4 672 391 B1**
(45) Date of publication and mention of the grant of the patent: **25.11.2026**
(21) Application number: 24382682.3
(22) Date of filing: 25.06.2024
(51) Int. Cl.: H01M 10/04, H01M 50/209, H01M 50/211, H01M 50/238, H01M 50/242, H01M 50/249

(54) **PRESSING DEVICE FOR A BATTERY CELL STACK**
ANDRÜCKVORRICHTUNG FÜR EINEN BATTERIEZELLENSTAPEL
DISPOSITIF DE PRESSION POUR UN EMPILEMENT D'ÉLÉMENTS DE BATTERIE

(43) Date of publication of application: 31.12.2025
(73) Proprietor: Ikerlan, S. Coop., 20500 Mondragon (ES)
(72) Inventor: AVILA LIMIA, Ander, 20500 Arrasate-Mondragon (ES); REMIREZ JAUREGUI, Adrian, 20500 Arrasate-Mondragon (ES); CABELLO ULLOA, Mario Javier, 20500 Arrasate-Mondragon (ES)
(74) Representative: Galbaian S.Coop.

(56) References cited:
- KR-A- 20180 068 379
- US-A1- 2019 115 614
- US-A1- 2021 305 651
- US-A1- 2022 285 778

## Description

### TECHNICAL FIELD

The present invention relates to pressing devices for battery cell stacks.

### PRIOR ART

Energy storage systems made up of a plurality of battery cells arranged adjacent to one another forming a stack are known today. However, it is known that battery cells tend to change in thickness due to different factors such as temperature, state of charge, or aging. Exerting pressure on the battery cells forming the cell stack is also known, given that the pressure exerted on said cells directly influences the efficiency and degradation thereof, such that the more homogeneous the pressure exerted on the battery cells is throughout their life cycle, the better their behaviour and the less their degradation will be.

EP3883007A1 describes a battery module comprising at least one battery cell stack and a module frame configured to receive at least one battery cell stack. The module frame comprises a structural component and a flexible component. The structural component comprises two end plates and two side plates. The flexible component comprises at least one resilient element. The resilient element is a sheet metal plate or a resilient polymer plate. When the battery cell stack is inserted into the module space, the stack compresses the resilient element.

US20210305651A1 describes a battery module comprising a battery cell assembly having a plurality of battery cells stacked on each other, a pair of end plates at opposite sides of the battery cell assembly, and a cover frame coupled to the pair of end plates to cover the battery cell assembly. The cover frame comprises elastic deforming portions having a groove shape spaced apart from each other by a predetermined distance along the longitudinal direction of the battery cell assembly and is deformed along an inflating direction of the plurality of battery cells when the plurality of battery cells are inflated.

### DISCLOSURE OF THE INVENTION

The object of the invention is to provide a pressing device, as defined in the claims.

The pressing device of the invention is a pressing device for a battery cell stack comprising a plurality of prismatic or pouch-type battery cells. The pressing device comprises a first pressure plate and a second pressure plate configured to be arranged at each end of the battery cell stack and press the battery cell stack, the plurality of battery cells being arranged stacked between the first pressure plate and the second pressure plate in a stacking direction. The pressing device comprises a first side structure and a second side structure configured to be fixed to the first pressure plate and to the second pressure plate. The first side structure and the second side structure expand in the stacking direction with an increase in the thickness of the battery cells and are compressed in said stacking direction with a decrease in the thickness of the battery cells, such that, in use, the first side structure and the second side structure have a variable width, said width corresponding approximately to the sum of the thicknesses of the battery cells of the battery cell stack. The first side structure and the second side structure comprise a plurality of deformable elements which for each width of the first side structure and the second side structure behave as deformable elements of positive stiffness, negative stiffness, or zero stiffness, the force exerted by the first pressure plate and the second pressure plate on the battery cells for each width of the first side structure and the second side structure being determined as a function of the stiffness of the deformable elements for said width.

The side structures comprise elongated structural elements joined together by means of the deformable elements, the elongated structural elements being arranged in the stacking direction of the battery cells, such that at least one elongated structural element is joined to the first pressure plate, and at least one elongated structural element is joined to the second pressure plate.

By means of the pressing device of the invention, it is possible to control the force exerted by the first pressure plate and the second pressure plate on the battery cells, thus improving the performance of said battery cells throughout their life cycle and reducing their degradation. The pressing device of the invention can be designed so that said force depends on the width at any given time of the first side structure and the second side structure.

These and other advantages and features of the invention will become apparent in view of the figures and detailed description of the invention.

### DESCRIPTION OF THE DRAWINGS

Figure 1 shows a perspective view of a first embodiment of the pressing device 1 of the invention arranged in a prismatic-type battery cell stack 10.
Figure 2 shows a perspective view of a second embodiment of the pressing device 1 of the invention arranged in a pouch-type battery cell stack 10.
Figure 3a shows a first illustrative example of a structure with two deformable elements, and Figure 3b shows a graphical representation of the stiffness of said structure.
Figure 4a shows a second illustrative example of a structure with two deformable elements, and Figure 4b shows a graphical representation of the stiffness of said structure.
Figure 5a shows a third illustrative example of a structure with two deformable elements, and Figure 5b shows a graphical representation of the stiffness of said structure.
Figure 6a shows a fourth illustrative example of a structure with two deformable elements, and Figure 6b shows a graphical representation of the stiffness of said structure.
Figure 7a shows a fourth illustrative example of a structure with three deformable elements, and Figure 7b shows a graphical representation of the stiffness of said structure.
Figure 8 shows a side structure of an embodiment of the pressing device 1 of the invention.
Figure 9 shows a side structure of an embodiment of the pressing device 1 of the invention.
Figure 10 shows a side structure of an embodiment of the pressing device 1 of the invention.
Figure 11 shows a side structure of an embodiment of the pressing device 1 of the invention.
Figure 12 shows a side structure of an embodiment of the pressing device 1 of the invention.

### DETAILED DISCLOSURE OF THE INVENTION

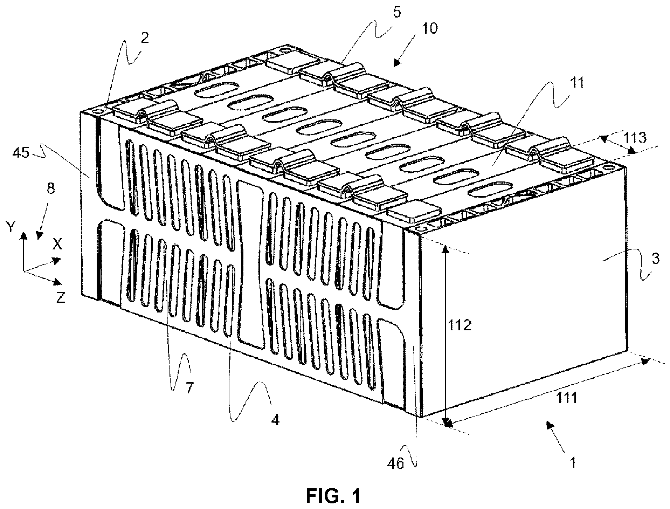

Figure 1 shows a battery with a battery cell stack 10 and a first embodiment of the pressing device 1 of the invention.

The pressing device 1 of the invention is a pressing device for a battery cell stack 10 comprising a plurality of prismatic or pouch-type battery cells 11. The pressing device 1 comprises a first pressure plate 2 and a second pressure plate 3 configured to be arranged at each end of the battery cell stack 10 and press the battery cell stack 10, the plurality of battery cells 11 being arranged stacked between the first pressure plate 2 and the second pressure plate 3 in a stacking direction. The pressing device 1 comprises a first side structure 4 and a second side structure 5 configured to be fixed to the first pressure plate 2 and the second pressure plate 3. The first side structure 4 and the second side structure 5 expand in the stacking direction with an increase in the thickness of the battery cells 11 and are compressed in said stacking direction with a decrease in the thickness of the battery cells 11, such that, in use, the first side structure 4 and the second side structure 5 have a variable width. The first side structure 4 and the second side structure 5 comprise a plurality of deformable elements 7 which for each width of the first side structure 4 and the second side structure 5 behave as deformable elements of positive stiffness, negative stiffness, or zero stiffness. The force exerted by the first pressure plate 2 and the second pressure plate 3 on the battery cells 11 for each width of the first side structure 4 and the second side structure 5 is determined as a function of the stiffness of the deformable elements 7 for said width.

Figure 1 shows a first embodiment of the pressing device 1 of the invention, wherein the battery cells 11 are of the prismatic type. Each battery cell 11 has two main flat sides or faces, the front side and the rear side, and four narrow sides, the left side, the right side, the top side and the bottom side. The battery cells 11 are arranged stacked, i.e. on top of each other on their respective front and rear sides, forming a battery cell stack 10. Each battery cell 11 has a width 111, a height 112, and a depth 113, which corresponds to the thickness of the battery cell 11. The width 111 and the height 112 define the dimensions of the front and rear sides of the battery cells, with the width 111 of each battery cell 11 corresponding to the measurement of the battery cell 11 in an X-direction of a coordinate axis 8 shown in Figure 1, and the height 112 corresponding to the measurement of the battery cell 11 in a Y-direction of the coordinate axis 8. Additionally, the depth 113 corresponds to the measurement of the battery cell 11 in a Z-direction of the coordinate axis 8. The battery cells 11 are stacked in a stacking direction, which in Figure 1 corresponds to the Z-direction of the coordinate axis 8. Furthermore, said stacking direction corresponds to the swelling direction of the battery cells 11. The battery cells 11 tend to change their thickness due to different factors such as temperature, state of charge or aging, such that by increasing or decreasing their thickness, the battery cell stack 10 increases or decreases its thickness in the Z direction of the coordinate axis 8 respectively. On the one hand, in each charge and discharge cycle, the battery cells 11 increase and decrease in thickness respectively due to the swelling of these, and on the other hand they also increase in thickness as they age (the more cycles of use a battery cell has, the more swollen it becomes). During the charging cycle of the battery cells 11 the battery cells 11 swell, thereby increasing their thickness. As the thickness of the battery cells 11 increases, these exert a mechanical load, i.e. a pressure on the first pressure plate 2 and the second pressure plate 3, which, being joined by means of the first side structure 4 and the second side structure 5, cause the first side structure 4 and the second side structure 5 to also be subjected to such a mechanical force or load. In the embodiment of Figure 1, two connectors protrude perpendicularly outwards from each of the battery cells 11 from their top side, the first side structure 4 being arranged next to the left sides of the battery cells 11, and the second side structure 5 (not shown in Figure 1) being arranged next to the right sides of the battery cells 11.

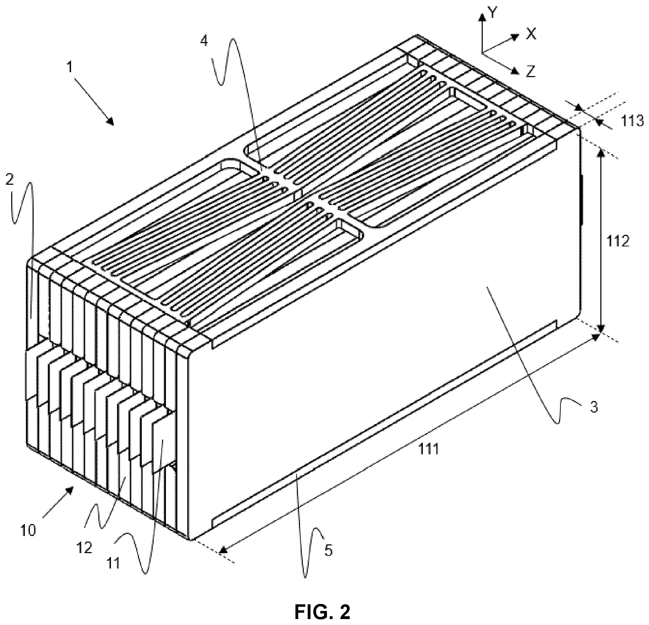

Figure 2 shows a battery with a battery cell stack 10 and a second embodiment of the pressing device 1 of the invention, wherein the battery cells 11 are of the pouch type, and are arranged stacked forming the battery cell stack 10. In this embodiment each battery cell 11 also has two main flat sides or faces, the front side and the rear side, and four narrow sides, the left side, the right side, the top side and the bottom side. The battery cells 11 are arranged stacked, i.e., on top of each other on their respective front and rear sides, forming a battery cell stack 10. Each battery cell 11 has a width 111, a height 112, and a depth 113 which corresponds to the thickness of the battery cell 11. As in the embodiment of Figure 1, the width 111 and the height 112 define the dimensions of the front and rear sides of the battery cells 11, with the width 111 of each battery cell 11 corresponding to the measurement of the battery cell 11 in an X-direction of a coordinate axis 8 shown in Figure 2, and the height 112 corresponding to the measurement of the battery cell 11 in a Y-direction of the coordinate axis 8. Additionally, the depth 113 corresponds to the measurement of the battery cell 11 in a Z-direction of the coordinate axis 8. The battery cells 11 are stacked in a stacking direction, which, as in Figure 1, corresponds to the Z-direction of the coordinate axis 8, said stacking direction corresponding to the swelling direction of the battery cells 11. As the thickness of the battery cells 11 increases, these exert a mechanical load, i.e. a pressure on the first pressure plate 2 and the second pressure plate 3, which, being joined by means of the first side structure 4 and the second side structure 5, cause the first side structure 4 and the second side structure 5 to also be subjected to such a mechanical force or load. In the embodiment of Figure 2, two connectors protrude perpendicularly outwards from each of the battery cells 11, one of the connectors protruding from the left side, and the other (not shown in the Figure) from the right side, the first side structure 4 being arranged next to the top sides of the battery cells 11, and the second side structure being arranged next to the bottom sides of the battery cells 11.

When the battery cells 11 are of the pouch type, each battery cell 11 is arranged on/in a holder 12 (or "cartridge"). In one embodiment of the invention the first pressure plate 2 is the holder 12 on or in which the first battery cell 11 is arranged in the battery cell stack 10, and/or the second pressure plate 3 is the holder 12 in which the last battery cell 11 is arranged in the battery cell stack 10. In other embodiments of the pressing device 1, the first pressure plate 2 and the second pressure plate 3 are additional plates to the holders 12 on/in which the battery cells 11 are arranged.

The side structures 4, 5 have three dimensions, a width, a height, and a depth or thickness. In the context of the invention the width of the side structures 4, 5 is considered to correspond to the measurement of the side structure 4, 5 in the Z-direction of the coordinate axis 8 shown in Figures 1 and 2, i.e. it corresponds approximately to the sum of the thicknesses of the battery cells 11 of the battery cell stack 10. The side structures 4, 5 are arranged next to two opposite narrow sides of the battery cells 11 respectively, i.e. they can be arranged next to the top sides and the bottom sides of the battery cells 11 respectively, or next to the right sides and the left sides of the battery cells 11 respectively. That is why, in those embodiments of the invention in which the side structures 4, 5 are arranged next to the right and left sides of the battery cells 11 respectively, as shown in Figure 1, the height of the side structures 4, 5 corresponds to the height 112 of the battery cells 11. However, in those embodiments of the invention in which the side structures 4, 5 are arranged next to the top and bottom sides respectively of the battery cells 11, as shown in Figure 2, the height of the side structures 4, 5 corresponds to the width 111 of the battery cells 11. As shown in Figures 1 and 2, the thickness of the side structures 4, 5 is substantially less than their width and height.

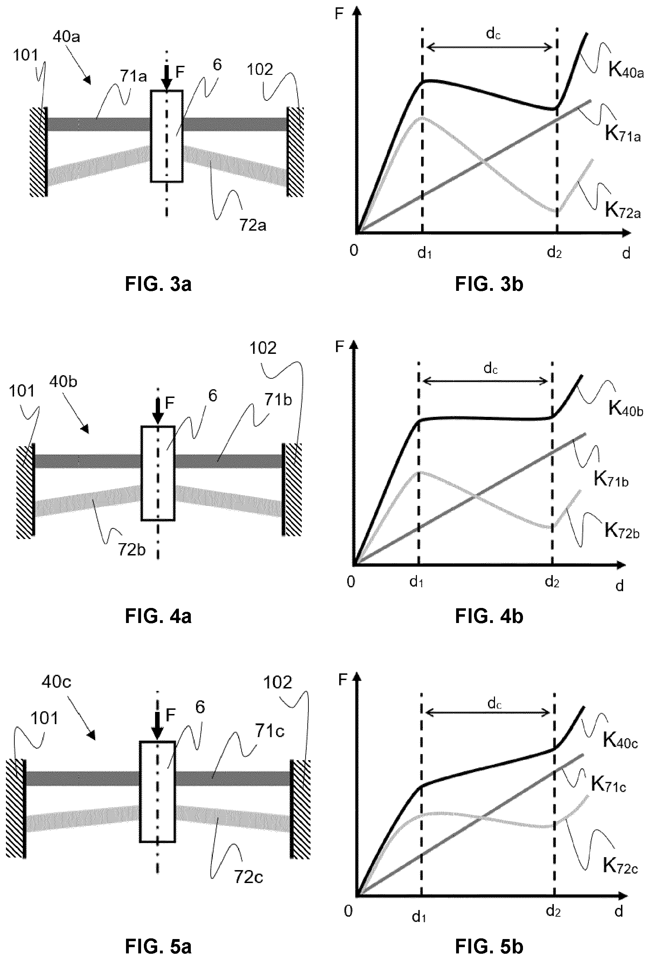

Figure 3a shows a first illustrative example of a structure 40a, comprising a first deformable element 71a and a second deformable element 72a. The first deformable element 71a and the second deformable element 72a have a first end fixed to a first support 101, and a second end fixed to a second support 102, both supports 101, 102 being held stationary. The structure 40a further comprises a structural element 6 fixed to the centre of both the first deformable element 71a and the second deformable element 72a. Figure 3b shows a graphical representation of the stiffness of the first deformable element K₇₁ₐ, and of the stiffness of the second deformable element K₇₂ₐ when a force F is exerted on the structural element 6 of the structure 40a in the direction indicated by the arrow (shown in Figure 3a). In the context of the invention stiffness is defined as the measure of the resistance of a body to deformation by a force applied to it. The graphical representation of the stiffness of the first deformable element K₇₁ₐ indicates that said first deformable element 71a behaves as a deformable element of positive stiffness, since in order for the structural element 6 to move in the direction of the force F it is necessary to apply an increasing force on said deformable element 71a in said direction. In this first explanatory example, the distance (d) by which the first deformable element 71a, and the second deformable element 72a have elongated, or stretched, in the direction of the force F, corresponds to the displacement of the structural element 6 in said direction. In view of the graphical representation of the stiffness of a deformable element 7, a deformable element 7 is considered to have positive stiffness when the slope of the curve representing the force (F) applied on the deformable element 7 with respect to the elongation (d) thereof in the direction of the force has a positive slope. Depending on the slope of said curve for each elongation (d) of the deformable element 7, the deformable element 7 may have positive stiffness if, as described above, the slope of the curve for that elongation is positive, negative stiffness if the slope is negative, or zero stiffness if the slope is zero. Although positive, negative and zero stiffness have been defined for a deformable element 7, said definitions are equally applicable to a side structure 4, 5.

In the case of the second deformable element 72a, for the structural element 6 to move in the direction of the force F up to a distance d₁, it is necessary to apply an increasing force on the second deformable element 72a. Therefore, the second deformable element 72a behaves as a deformable element of positive stiffness from its equilibrium position (position in which no force acts on it), up to said distance d₁. However, once the structural element 6 has moved a distance d₁ in the direction of the force F, in order for it to move up to a distance d₂, it is necessary to apply less and less force on the second deformable element 72a, therefore the second deformable element 72a behaves as a deformable element of negative stiffness in the section between d₁ and d₂. Finally, once the structural element 6 has moved in the direction of the force F a distance d₂, in order for it to continue to move further, it is necessary to exert an increasing force on the second deformable element 72a again, therefore from this distance d₂, the second deformable element 72a behaves again as a deformable element of positive stiffness.

The graph in Figure 3b also shows the stiffness of the structure K₄₀ₐ as the sum of the stiffnesses of the first deformable element 71a and the second deformable element 72a. In this first explanatory example, the distance (d) by which the structure 40a has elongated, or stretched, in the direction of the force (F), corresponds to the displacement of the structural element 6 in said direction. As it can be seen in said Figure, the structure 40a behaves as a structure of positive stiffness from its equilibrium position (position in which no force acts on the structure) until when the structural element 6 has displaced in the direction of the force F by a distance d₁ , as a structure of negative stiffness in the section d_{c} when the structural element 6 has moved from its equilibrium position in the direction of the force a distance between d₁ and d₂ , and as a structure of positive stiffness when the structural element 6 has moved from its equilibrium position a distance greater than d₂.

Figure 4a shows a second illustrative example of a structure 40b, similar to the structure 40a in Figure 3a, comprising a first deformable element 71b and a second deformable element 72b. Figure 4b shows a graphical representation of the stiffness of the first deformable element K_{71b}, the stiffness of the second deformable element K_{72b}, and the stiffness of the structure K_{40b} when a force F is exerted on the structural element 6 of the structure 40b in the direction indicated by the arrow (shown in Figure 4a). In this second illustrative example, the structure 40b behaves as a structure of zero stiffness in the interval d_{c} in which the structural element 6 has moved in the direction of the force F a distance between d₁ and d₂ from its equilibrium position, while in said interval the first deformable element 71b behaves as a deformable element of positive stiffness, and the second deformable element 72b as a deformable element of negative stiffness.

Figure 5a shows a third illustrative example of a structure 40c, similar to the structure 40a in Figure 3a, comprising a first deformable element 71c and a second deformable element 72c. Figure 5b shows a graphical representation of the stiffness of the first deformable element K_{71c}, the stiffness of the second deformable element K_{72c} , and the stiffness of the structure K_{40c} when a force F is exerted on the structural element 6 of the structure 40c in the direction indicated by the arrow (shown in Figure 5a). In this third illustrative example, the structure 40c behaves as a structure of positive stiffness in the interval d_{c} in which the structural element 6 has moved in the direction of the force F a distance between d₁ and d₂ from its equilibrium position, while in said interval the first deformable element 71c behaves as a deformable element of positive stiffness, and the second deformable element 72c as a deformable element of negative stiffness.

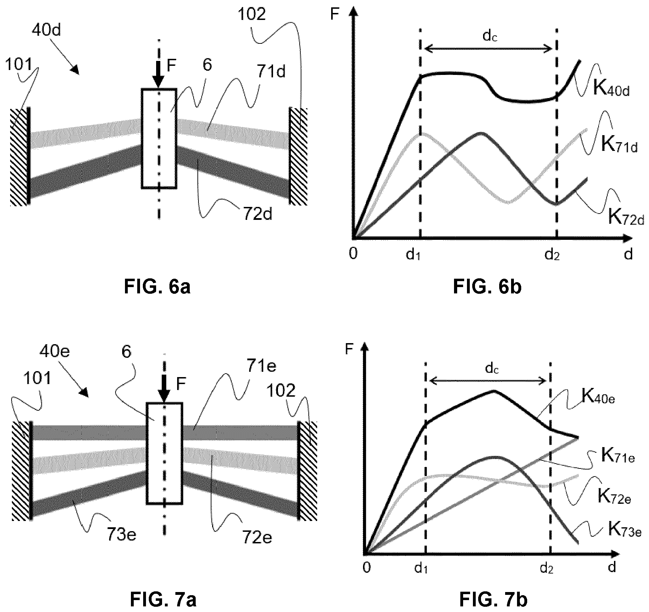

Figure 6a shows a fourth illustrative example of a structure 40d, comprising a first deformable element 71d and a second deformable element 72d. Figure 6b shows a graphical representation of the stiffness of the first deformable element K_{71d}, the stiffness of the second deformable element K_{72d}, and the stiffness of the structure K_{40d} when a force F is exerted on the structural element 6 of the structure 40d in the direction indicated by the arrow (shown in Figure 6a). In this fourth illustrative example, the structure 40d behaves substantially as a structure of zero stiffness in a first section between an elongation d₁ and an elongation between d₁ and d₂, and also behaves substantially as a structure of zero stiffness in a second section thereafter and up to an elongation up to d₂, wherein the force required for the structure to continue to elongate in the first section and in the second section between d₁ and d₂, is different.

Figure 7a shows a fifth illustrative example of a structure 40e, comprising a first deformable element 71e, a second deformable element 72e, and a third deformable element 73e. Figure 7b shows a graphical representation of the stiffness of the first deformable element K₇₁ₑ, the stiffness of the second deformable element K₇₂ₑ, the stiffness of the third deformable element K₇₃ₑ, and the stiffness of the structure K₄₀ₑ when a force F is exerted on the structural element 6 of the structure 40e in the direction indicated by the arrow (shown in Figure 7a). In this fifth illustrative example, the structure 40e behaves as a structure of positive stiffness in a first section between an elongation d₁ and an elongation between d₁ and d₂, and as a structure of negative stiffness in a second section following the first section up to an elongation up to d₂.

During the charging cycle of the battery cells 11 wherein said battery cells 11 swell thereby increasing their thickness, the battery cells 11 exert a mechanical load on the first pressure plate 2 and the second pressure plate 3 in the stacking direction, which, being joined by the first side structure 4 and the second side structure 5, cause them to deform and expand in said direction. At each moment, the first side structure and the second side structure 5 have a certain width, which corresponds to the width that the side structures 4, 5 have in their equilibrium position, which is the position in which no force acts on said side structures 4, 5, plus the elongation that at said moment the side structures 4, 5 have as a consequence of the force exerted by the battery cells 11 on the first pressure plate 2, and the second pressure plate 3, and consequently on the first side structure 4 and the second side structure 5. In the same way, when in a discharge cycle the battery cells shrink and thus decrease in thickness, the mechanical load exerted by the battery cells on the pressure plates 2, 3 in the stacking direction decreases, which causes the side structures 4, 5 to contract.

The first side structure 4 and the second side structure 5 comprise a plurality of deformable elements 7, so that the force exerted by the battery cells 11 on the first side structure 4 and the second side structure 5 in the stacking direction is translated into a force exerted on the deformable elements 7 in said stacking direction. As a consequence of said force, the deformable elements 7 deform, causing the width of the first side structure 4 and the second side structure 5 to be variable. For each width of the first side structure 4 and the second side structure 5, the deformable elements 7 can each behave as a deformable element of positive stiffness, negative stiffness, or zero stiffness. Thus, by means of the pressing device of the invention, it is possible to determine the force that the first pressure plate 2 and the second pressure plate 3 are going to exert on the battery cells 11 at a given moment, as a function of the width of the first side structure 4 and of the second side structure 5 at said moment, and of the stiffness of the deformable elements 7 for said width.

The pressing device 1 of the invention has an additional advantage, since for its implementation it is not necessary to add additional parts, but rather the side plates used in the prior art are replaced by the side structures 4, 5 of the invention. For all these reasons, the pressing device 1 of the invention is a compact, space-saving pressing device, which makes it possible to implement solutions that are volumetrically equal to those in which the pressure on the battery cell stack 10 is not compensated.

In one embodiment of the pressing device 1, the first side structure 4 and the second side structure 5 are configured to, in use, expand to a maximum width. Said maximum width of the first side structure 1 and the second side structure 2 corresponds to the width said side structures 4, 5 have in their equilibrium position, which is that position in which no force acts on them, plus a maximum distance by which said first side structure 4 and second side structure 5 can elongate, in use.

In one embodiment of the pressing device 1, the first side structure 4 and the second side structure 5 are configured to, in use, expand from a minimum width. When the pressing device 1 is installed in a battery cell stack 10, the first side structure 4 and the second side structure 5 have a minimum width, which corresponds to the width that the side structures 4, 5 have in their equilibrium position, plus a minimum distance, i.e. when the pressing device 1 is mounted in the battery cell stack 10, the side structures 4, 5 are pre-stressed, and therefore, said side structures 4, 5 have elongated by said minimum distance.

In one embodiment of the pressing device 1, the force exerted by the first pressure plate 2 and the second pressure plate 3 on the battery cells 11 from the minimum width to the maximum width of the first side structure 4 and the second side structure 5 is constant. In said embodiment, the side structures 4, 5 behave as structures of zero stiffness when their width is between the minimum width and the maximum width.

According to the invention, the side structures 4, 5 comprise elongated structural elements 6 joined together by means of the deformable elements 7. In an embodiment of the pressing device 1, the elongated structural elements 6 have an elongated shape. The elongated structural elements 6 are characterised by, in use, not deforming when subjected to the force exerted on them by the battery cells 11 of the battery cell stack 10 as they swell and shrink.

In a preferred embodiment of the invention, the first side structure 4 and the second side structure 5 are made of a material with a high ratio between the yield strength thereof and its Young's modulus. Examples of such materials include polymers, fibre-reinforced polymers, composites, titanium alloys, some elastomers, etc.

According to the invention, the elongated structural elements 6 are arranged in the stacking direction of the battery cells 11, such that at least one elongated structural element 6 is joined to the first pressure plate 2, and at least one elongated structural element 6 is joined to the second pressure plate 3. Preferably, the at least one elongated structural element 6 and the first pressure plate 2 are joined to each other directly, and preferably, the at least one elongated structural element 6 and the second pressure plate 3 are joined to each other directly. Thus, an elongated structural element 6 may be joined to either the first pressure plate 2 or the second pressure plate 3, but may not be joined to both. An elongated structural element 6 may not be joined to any of the first or second pressure plates 2, 3, in which case it would be an intermediate elongated structural element 6.

The elongated structural elements 6 comprise a first end 6' and a second end 6", the first end 6' being closer to the first pressure plate 2 than the second end 6", and the second end 6" being closer to the second pressure plate 3 than the first end 6'. The intermediate elongated structural elements 6 arranged between the structural element 6 which is joined to the first pressure plate 2 and the structural element 6 which is joined to the second pressure plate 3, are joined to at least one elongated structural element 6 arranged immediately before it in the direction from the first pressure plate 2 to the second pressure plate 3, and to at least one elongated structural element 6 arranged immediately after it in the same direction, such that the first end 6' of the previous elongated structural element 6 is closer to the first pressure plate 2 than the first end 6' of the elongated structural element 6 in question, and such that the first end 6' of the next elongated structural element 6 is closer to the second pressure plate 3 than the first end 6' of the elongated structural element 6 in question. In the same way, the second end 6" of the next elongated structural element 6 is closer to the second pressure plate 3 than the second end 6" of the elongated structural element 6 in question, and such that the second end 6" of the previous elongated structural element 6 is closer to the first pressure plate 3 than the second end 6" of the elongated structural element 6 in question. As shown in Figure 1, the longitudinal axis of the elongated structural elements 6 coincides with the stacking direction, i.e. with the Z direction of the coordinate axis 8.

In one embodiment of the invention, the side structures 4, 5 comprise a first and a second connecting bar 45, 46 arranged at each end of the side structures 4, 5, such that the first end 6' of the elongated structural element 6 joined to the first side structure 4 forms part of the connecting bar 45, and the second end 6" of the elongated structural element 6 joined to the second side structure 5 forms part of the connecting bar 46.

In one embodiment of the pressing device 1 of the invention, the deformable elements 7 joining an elongated structural element 6 to another elongated structural element 6 are arranged parallel to each other.

In one embodiment of the pressing device 1 of the invention, the deformable elements 7 joining an elongated structural element 6 to another elongated structural element 6 are arranged equidistant from each other.

In one embodiment of the invention, as shown in the figures, the deformable elements 7 joining an elongated structural element 6 joined to one of the pressure plates 2, 3 to the next elongated structural element 6 are arranged such that the ends of the deformable elements 7 joined to the elongated structural element 6 joined to one of the pressure plates 2, 3 are arranged further away from the respective pressure plate 2, 3 than the ends of the deformable elements 7 joined to the next elongated structural element 6. In an alternative embodiment, said ends are arranged at the same distance from the respective pressure plate 2, 3.

In an embodiment of the pressing device 1 of the invention, the first side structure 4 and the second side structure 5 have a lower part 42, a central part 43, and an upper part 44, and comprise at least one set formed by an upper elongated structural element 61 located in the upper part 44 and a lower elongated structural element 62 located in the lower part 42 below said upper elongated structural element 61, and at least one central elongated structural element 63 located in the central part 43, the upper elongated structural element 61 of the set being joined to the central elongated structural element 63, and the lower elongated structural element 62 of the set being joined to the central elongated structural element 63.

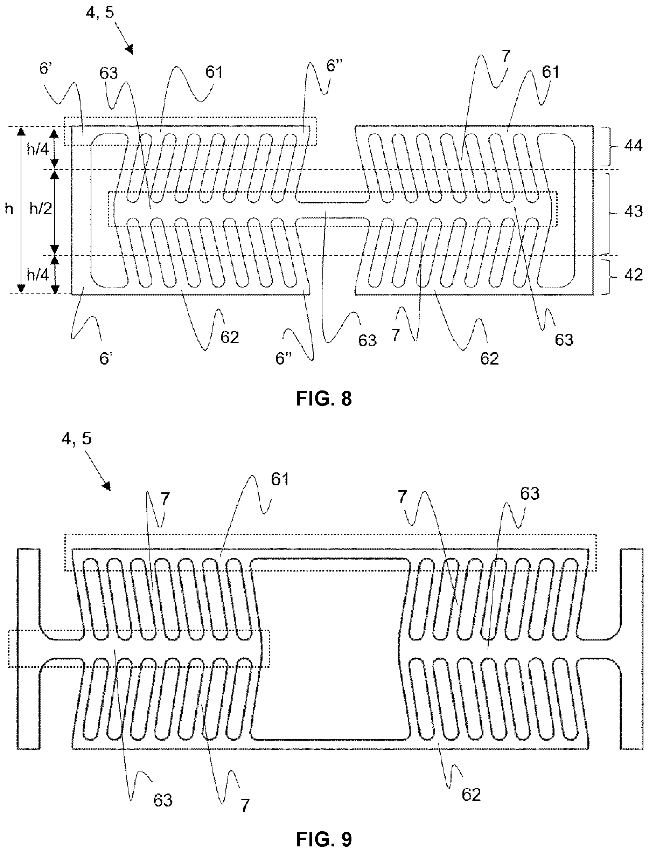

In one embodiment of the invention, the lower part 42 of the side structures 4, 5 is considered to be that part of the side structure 4, 5 comprised up to a height equal to one quarter of the total height h of the side structure 4, 5, as shown in Figure 8. Thus, the central part 43 of the side structures 4, 5 is considered to be the part of the side structure 4, 5 comprised from a height equal to one quarter of the total height h of the side structure 4, 5 to a height equal to three quarters of the total height h of the side structure 4, 5. Finally, the upper part 44 of the side structures 4, 5 is considered to be the part of the side structure 4, 5 comprised from a height equal to three quarters of the total height h of the side structure 4, 5 to the height h of the side structure 4, 5. In other embodiments of the invention the lower part 42, the central part 43, and the upper part 44 may correspond to other percentages of the total height h of the side structure 4, 5 such that the upper elongated structural elements 61 are arranged in a substantially upper part of said side structures 4, 5, the lower elongated structural elements 62 are arranged in a substantially lower part of said side structures 4, 5, and the central elongated structural elements 63 are arranged in a substantially central part of said side structures 4, 5.

Figure 8 shows a side structure 4, 5 of an embodiment of the pressing device of the invention, comprising at least one set formed by an upper elongated structural element 61 located in the upper part 44 and a lower elongated structural element 62 located in the lower part 42 below said upper elongated structural element 61, and at least one central elongated structural element 63 located in the central part 43, the upper elongated structural element 61 of the set being joined to the central elongated structural element 63, and the lower elongated structural element 62 of the set being joined to the central elongated structural element 63. In said embodiment, the lower elongated structural element 62 of the set is located below the upper elongated structural element 61 such that the first end 61' of the upper elongated structural element 61 and the first end 62' of the lower elongated structural element 62 are located at the same distance from the first pressure plate 2 and the second pressure plate 3, and that the second end 61" of the upper elongated structural element 61 and the second end 62" of the lower elongated structural element 62 are located at the same distance from the first pressure plate 2 and the second pressure plate 3 when the side structures 4, 5 are fixed to the first pressure plate 2 and the second pressure plate 3. In said embodiment, the upper elongated structural element 61 and the lower elongated structural element 62 of the set are joined to the central elongated structural element 63 by means of deformable elements 7.

In one embodiment of the pressing device 1 of the invention, the first side structure 4 and the second side structure 5 comprise a first set joined to the first pressure plate 2, and a second set joined to the second pressure plate 3.

In one embodiment of the pressing device 1 of the invention, the first side structure 4 and the second side structure 5 comprise a central elongated structural element 63 joined to the first and second set.

Figure 8 shows a side structure 4, 5 of an embodiment of the pressing device 1 comprising a first set configured to be joined to the first pressure plate 2, and a second set configured to be joined to the second pressure plate 3, and a central elongated structural element 63 joined to the first and second set. In said figure, the upper elongated structural element 61 of the first set, and the central elongated structural element 63 are highlighted by means of dotted rectangles for their better identification. As described above, the central elongated structural element 63 is joined to the upper elongated structural element 61 and the lower elongated structural element 62 of the first set by means of deformable elements 7. In the same way the central elongated structural element 63 is joined to the upper elongated structural element 61 and the lower elongated structural element 62 of the second set by means of deformable elements 7.

In other embodiments of the pressing device 1 of the invention, more than one central elongated structural element 63 may be arranged between a first set joined to the first pressure plate 2, and a second set joined to the second pressure plate 3.

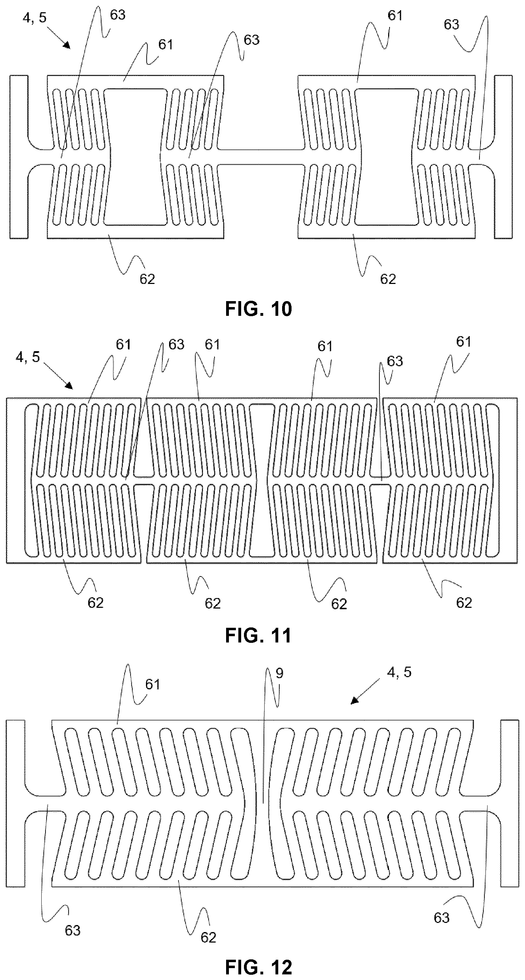

Figure 11 shows a side structure 4, 5 of another embodiment of the pressing device 1, comprising a first set configured to be joined to the first pressure plate 2, a second set, and a third set configured to be joined to the second pressure plate 3. The pressing device further comprises a first central elongated structural element 63 joined to the first and second set, and a second central elongated structural element 63 joined to the second and third set.

In one embodiment of the pressing device 1, the first side structure 4 and the second side structure 5 comprise a first central elongated structural element 63 joined to the first pressure plate 2, and a second central elongated structural element 63 joined to the second pressure plate 3.

In one embodiment of the pressing device 1, the first side structure 4 and the second side structure 5 comprise a set joined to the first and second central elongated structural element 63.

Figure 9 shows a side structure 4, 5 of an embodiment of the pressing device 1 comprising a first central elongated structural element 63 configured to be joined to the first pressure plate 2, and a second central elongated structural element 63 configured to be joined to the second pressure plate 3, and a set joined to the first and second central elongated structural element 63. The first central elongated structural element 63 and the upper elongated structural element 61 of the set are shown highlighted in the Figure by means of dotted rectangles for better identification. The first central elongated structural element 63 is joined to the upper elongated structural element 61 and the lower elongated structural element 62 of the set by means of deformable elements 7. In the same way, the second central elongated structural element 63 is joined to the upper elongated structural element 61 and the lower elongated structural element 62 of the set by means of deformable elements 7.

In other embodiments of the pressing device 1 of the invention, more than one set may be arranged between a first central elongated structural element 63 joined to the first pressure plate 2 and a second central elongated structural element 63 joined to the second pressure plate 3.

Figure 10 shows a side structure 4, 5 of another embodiment of the pressing device 1, comprising a first central elongated structural element 63 configured to be joined to the first pressure plate 2, a second central elongated structural element 63, and a third central elongated structural element 63 configured to be joined to the second pressure plate 3. The pressing device further comprises a first set joined to the first and second central elongated structural element 63, and a second set joined to the second and third central elongated structural element 63.

In one embodiment of the pressing device 1, the set comprises a cross beam 9 joined to the upper elongated structural element 61 and to the lower elongated structural element 62, arranged perpendicular to both, and in the middle of the set. Figure 12 shows an embodiment wherein the set comprises a cross beam 9.

In an embodiment of the pressing device 1, the thickness of the at least one central elongated structural element 63 is equal to or greater than the thickness of the upper elongated structural element 61 and the lower elongated structural element 62 of the at least one set. In the context of the invention, the thickness of an elongated structural element 6 is understood to be the measurement of the elongated structural element 6 in the direction corresponding to the height of the side structure 4, 5 of which it forms part. Figure 9 shows a side structure 4, 5 of an embodiment of the pressing device 1, wherein the thickness of the central elongated structural element 63 is greater than the thickness of the upper elongated structural element 61 and the lower elongated structural element 62. In this embodiment, the upper elongated structural element 61 and the lower elongated structural element 62 have the same thickness.

In another embodiment of the invention, all elongated structural elements 6 have the same thickness.

In one embodiment of the pressing device, the at least one central elongated structural element 63 is arranged equidistant between the upper elongated structural element 61 and the lower elongated structural element 62 of the at least one set.

In one embodiment of the pressing device 1, the at least one central elongated structural element 63 is arranged closer to the upper elongated structural element 61 or the lower elongated structural element 62 of the at least one set, the thickness of said closest upper elongated structural element 61 or lower elongated structural element 62 being less than the thickness of the furthest lower elongated structural element 62 or upper elongated structural element 61.

In one embodiment of the invention, the first side structure 4 and the second side structure 5 are the same.

In one embodiment of the invention, the pressure plates 2, 3, and the side structures 4, 5 are manufactured in one piece.

## Claims

1. Pressing device for a battery cell stack (10) comprising a plurality of prismatic or pouch-type battery cells (11), the pressing device (1) comprising:
- a first pressure plate (2) and a second pressure plate (3) configured to be arranged at each end of the battery cell stack (10) and press the battery cell stack (10), the plurality of battery cells (11) being arranged stacked between the first pressure plate (2) and the second pressure plate (3) in a stacking direction, and
- a first side structure (4) and a second side structure (5) configured to be fixed to the first pressure plate (2) and to the second pressure plate (3),
wherein the first side structure (4) and the second side structure (5) expand in the stacking direction with an increase in the thickness of the battery cells (11) and are compressed in said stacking direction with a decrease in the thickness of the battery cells (11), such that, in use, the first side structure (4) and the second side structure (5) have a variable width, said width corresponding approximately to the sum of the thicknesses of the battery cells (11) of the battery cell stack (10), the first side structure (4) and the second side structure (5) comprising a plurality of deformable elements (7) which for each width of the first side structure (4) and the second side structure (5) behave as deformable elements of positive stiffness, and the force exerted by the first pressure plate (2) and the second pressure plate (3) on the battery cells (11) for each width of the first side structure (4) and the second side structure (5) being determined as a function of the stiffness of the deformable elements (7) for said width, wherein the side structures (4, 5) comprise elongated structural elements (6) joined together by means of the deformable elements (7), **characterised in that** the elongated structural elements (6) are arranged in the stacking direction of the battery cells (11), such that at least one elongated structural element (6) is joined to the first pressure plate (2), and at least one elongated structural element (6) is joined to the second pressure plate (3), and such that for each width of the first side structure (4) and the second side structure (5) the plurality of deformable elements (7) may also behave as deformable elements of negative stiffness, or zero stiffness.

2. Pressing device according to claim 1, wherein the first side structure (4) and the second side structure (5) are configured to, in use, expand to a maximum width.

3. Pressing device according to claim 2, wherein the first side structure (4) and the second side structure (5) are configured to, in use, expand from a minimum width.

4. Pressing device according to claim 3, wherein the first side structure (4) and the second side structure (5) behave as structures of zero stiffness when their width is between the minimum width and the maximum width.

5. Pressing device according to any of the preceding claims, wherein the deformable elements (7) joining an elongated structural element (6) to another elongated structural element (6) are arranged parallel to each other.

6. Pressing device according to any of the preceding claims, wherein the first side structure (4) and the second side structure (5) have a lower part (42), a central part (43), and an upper part (44), and comprise
- at least one set formed by an upper elongated structural element (61) located in the upper part (44) and a lower elongated structural element (62) located in the lower part (42) below said upper elongated structural element (61), and
- at least one central elongated structural element (63) located in the central part (43),
the upper elongated structural element (61) of the set being joined to the central elongated structural element (63), and the lower elongated structural element (62) of the set being joined to the central elongated structural element (63).

7. Pressing device according to claim 6, wherein the first side structure (4) and the second side structure (5) comprise a first set joined to the first pressure plate (2), and a second set joined to the second pressure plate (3).

8. Pressing device according to claim 7, wherein the first side structure (4) and the second side structure (5) comprise a central elongated structural element (63) joined to the first and to the second set.

9. Pressing device according to claim 6, wherein the first side structure (4) and the second side structure (5) comprise a first central elongated structural element (63) joined to the first pressure plate (2), and a second central elongated structural element (63) joined to the second pressure plate (3).

10. Pressing device according to claim 9, wherein the first side structure (4) and the second side structure (5) comprise a set joined to the first and to the second central elongated structural element (63), the set preferably comprising a cross beam (9) joined to the upper elongated structural element (61) and to the lower elongated structural element (62), arranged perpendicular to both, and in the middle of the set.

11. Pressing device according to any of claims 6 to 10, wherein the thickness of the at least one central elongated structural element (63) is equal to or greater than the thickness of the upper elongated structural element (61) and the lower elongated structural element (62) of the at least one set.

12. Pressing device according to any of claims 6 to 11, wherein the at least one central elongated structural element (63) is arranged equidistant between the upper elongated structural element (61) and the lower elongated structural element (62) of the at least one set.

13. Battery comprising a battery cell stack (10) and a pressing device (1) according to any of the preceding claims.

## Patentansprüche

1. Andrückvorrichtung für einen Batteriezellenstapel (10), umfassend eine Vielzahl von prismatischen oder beutelartigen Batteriezellen (11), wobei die Andrückvorrichtung (1) Folgendes umfasst:
- eine erste Druckplatte (2) und eine zweite Druckplatte (3), die dazu konfiguriert sind, an jedem Ende des Batteriezellenstapels (10) angeordnet zu sein und den Batteriezellenstapel (10) zu drücken, wobei die Vielzahl von Batteriezellen (11) in Stapelrichtung zwischen der ersten Druckplatte (2) und der zweiten Druckplatte (3) gestapelt angeordnet ist, und
- eine erste Seitenstruktur (4) und eine zweite Seitenstruktur (5), die dazu konfiguriert sind, an der ersten Druckplatte (2) und an der zweiten Druckplatte (3) fixiert zu werden,
wobei sich die erste Seitenstruktur (4) und die zweite Seitenstruktur (5) bei einer Zunahme der Dicke der Batteriezellen (11) in Stapelrichtung ausdehnen und bei einer Abnahme der Dicke der Batteriezellen (11) in der Stapelrichtung zusammengedrückt werden, sodass während der Verwendung die erste Seitenstruktur (4) und die zweite Seitenstruktur (5) eine variable Breite aufweisen, wobei die Breite in etwa der Summe der Dicken der Batteriezellen (11) des Batteriezellenstapels (10) entspricht, wobei die erste Seitenstruktur (4) und die zweite Seitenstruktur (5) eine Vielzahl von verformbaren Elementen (7) umfassen, die sich bei jeder Breite der ersten Seitenstruktur (4) und der zweiten Seitenstruktur (5) als verformbare Elemente mit positiver Steifigkeit verhalten, und wobei die von der ersten Druckplatte (2) und der zweiten Druckplatte (3) auf die Batteriezellen (11) ausgeübte Kraft für jede Breite der ersten Seitenstruktur (4) und der zweiten Seitenstruktur (5) in Abhängigkeit von der Steifigkeit der verformbaren Elemente (7) für die Breite bestimmt wird, wobei die Seitenstrukturen (4, 5) längliche Strukturelemente (6) umfassen, die mittels der verformbaren Elemente (7) zusammengefügt sind, **dadurch gekennzeichnet, dass** die länglichen Strukturelemente (6) in Stapelrichtung der Batteriezellen (11) derart angeordnet sind, dass mindestens ein längliches Strukturelement (6) mit der ersten Druckplatte (2) zusammengefügt ist und mindestens ein längliches Strukturelement (6) mit der zweiten Druckplatte (3) zusammengefügt ist, und derart, dass für jede Breite der ersten Seitenstruktur (4) und der zweiten Seitenstruktur (5) die Vielzahl von verformbaren Elementen (7) sich auch als verformbare Elemente mit negativer Steifigkeit oder Nullsteifigkeit verhalten kann.

2. Andrückvorrichtung nach Anspruch 1, wobei die erste Seitenstruktur (4) und die zweite Seitenstruktur (5) dazu konfiguriert sind, sich während der Verwendung auf eine maximale Breite auszudehnen.

3. Andrückvorrichtung nach Anspruch 2, wobei die erste Seitenstruktur (4) und die zweite Seitenstruktur (5) dazu konfiguriert sind, sich während der Verwendung ausgehend von einer minimalen Breite auszudehnen.

4. Andrückvorrichtung nach Anspruch 3, wobei sich die erste Seitenstruktur (4) und die zweite Seitenstruktur (5) wie Strukturen mit null Steifigkeit verhalten, wenn ihre Breite zwischen der minimalen Breite und der maximalen Breite liegt.

5. Andrückvorrichtung nach einem der vorhergehenden Ansprüche, wobei die verformbaren Elemente (7), die ein längliches Strukturelement (6) mit einem anderen länglichen Strukturelement (6) zusammenfügen, parallel zueinander angeordnet sind.

6. Andrückvorrichtung nach einem der vorhergehenden Ansprüche, wobei die erste Seitenstruktur (4) und die zweite Seitenstruktur (5) einen unteren Teil (42), einen zentralen Teil (43) und einen oberen Teil (44) aufweisen und Folgendes umfassen:
- mindestens einen Satz, der aus einem oberen länglichen Strukturelement (61), das sich im oberen Teil (44) befindet, und einem unteren länglichen Strukturelement (62) besteht, das sich im unteren Teil (42) unterhalb des oberen länglichen Strukturelements (61) befindet, und
- mindestens ein zentrales, längliches Strukturelement (63), das sich im zentralen Teil (43) befindet,
wobei das obere, längliche Strukturelement (61) des Satzes mit dem zentralen, länglichen Strukturelement (63) zusammengefügt ist und das untere, längliche Strukturelement (62) des Satzes mit dem zentralen, länglichen Strukturelement (63) zusammengefügt ist.

7. Andrückvorrichtung nach Anspruch 6, wobei die erste Seitenstruktur (4) und die zweite Seitenstruktur (5) einen ersten Satz, der mit der ersten Druckplatte (2) zusammengefügt ist, und einen zweiten Satz umfassen, der mit der zweiten Druckplatte (3) zusammengefügt ist.

8. Andrückvorrichtung nach Anspruch 7, wobei die erste Seitenstruktur (4) und die zweite Seitenstruktur (5) ein zentrales, längliches Strukturelement (63) umfassen, das mit dem ersten und dem zweiten Satz zusammengefügt ist.

9. Andrückvorrichtung nach Anspruch 6, wobei die erste Seitenstruktur (4) und die zweite Seitenstruktur (5) ein erstes zentrales, längliches Strukturelement (63), das mit der ersten Druckplatte (2) zusammengefügt ist, und ein zweites zentrales, längliches Strukturelement (63), das mit der zweiten Druckplatte (3) zusammengefügt ist, umfassen.

10. Andrückvorrichtung nach Anspruch 9, wobei die erste Seitenstruktur (4) und die zweite Seitenstruktur (5) einen Satz umfassen, der mit dem ersten und dem zweiten zentralen länglichen Strukturelement (63) zusammengefügt ist, wobei der Satz vorzugsweise einen Querträger (9) umfasst, der mit dem oberen länglichen Strukturelement (61) und dem unteren länglichen Strukturelement (62) zusammengefügt ist, senkrecht zu beiden angeordnet ist und sich in der Mitte des Satzes befindet.

11. Andrückvorrichtung nach einem der Ansprüche 6 bis 10, wobei die Dicke des mindestens einen zentralen, länglichen Strukturelements (63) gleich oder größer ist als die Dicke des oberen, länglichen Strukturelements (61) und des unteren, länglichen Strukturelements (62) des mindestens einen Satzes.

12. Andrückvorrichtung nach einem der Ansprüche 6 bis 11, wobei das mindestens eine zentrale, längliche Strukturelement (63) in gleichem Abstand zwischen dem oberen, länglichen Strukturelement (61) und dem unteren, länglichen Strukturelement (62) des mindestens einen Satzes angeordnet ist.

13. Batterie, umfassend einen Batteriezellenstapel (10) und eine Andrückvorrichtung (1) nach einem der vorhergehenden Ansprüche.

## Revendications

1. Dispositif de compression pour un empilement de cellules de batterie (10) comprenant une pluralité de cellules de batterie (11) prismatiques ou de type poche, le dispositif de compression (1) comprenant:
- un premier plateau de pression (2) et un second plateau de pression (3) configurés pour être disposés à chaque extrémité de l'empilement de cellules de batterie (10) et comprimer l'empilement de cellules de batterie (10), la pluralité de cellules de batterie (11) étant disposées de manière empilée entre le premier plateau de pression (2) et le second plateau de pression (3) suivant une direction d'empilement, et
- une première structure latérale (4) et une seconde structure latérale (5) configurées pour être fixées au premier plateau de pression (2) et au second plateau de pression (3),
dans lequel la première structure latérale (4) et la seconde structure latérale (5) s'étendent suivant la direction d'empilement lorsque l'épaisseur des cellules de batterie (11) augmente et sont comprimées suivant ladite direction d'empilement lorsque l'épaisseur des cellules de batterie (11) diminue, de telle sorte que, en utilisation, la première structure latérale (4) et la seconde structure latérale (5) présentent une largeur variable, ladite largeur correspondant approximativement à la somme des épaisseurs des cellules de batterie (11) de l'empilement de cellules de batterie (10), la première structure latérale (4) et la seconde structure latérale (5) comprenant une pluralité d'éléments déformables (7) qui, pour chaque largeur de la première structure latérale (4) et de la seconde structure latérale (5), se comportent comme des éléments déformables à raideur positive, et la force exercée par le premier plateau de pression (2) et le second plateau de pression (3) sur les cellules de batterie (11) pour chaque largeur de la première structure latérale (4) et de la seconde structure latérale (5) étant déterminée en fonction de la raideur des éléments déformables (7) pour ladite largeur, dans lequel les structures latérales (4, 5) comprennent des éléments structurels allongés (6) reliés entre eux au moyen des éléments déformables (7), **caractérisé en ce que** les éléments structurels allongés (6) sont disposés suivant la direction d'empilement des cellules de batterie (11), de telle sorte qu'au moins un élément structurel allongé (6) est relié au premier plateau de pression (2), et qu'au moins un élément structurel allongé (6) est relié au second plateau de pression (3), et de telle sorte que, pour chaque largeur de la première structure latérale (4) et de la seconde structure latérale (5), la pluralité d'éléments déformables (7) peuvent également se comporter comme des éléments déformables à raideur négative ou à raideur nulle.

2. Dispositif de compression selon la revendication 1, dans lequel la première structure latérale (4) et la seconde structure latérale (5) sont configurées pour, en utilisation, s'étendre jusqu'à une largeur maximale.

3. Dispositif de compression selon la revendication 2, dans lequel la première structure latérale (4) et la seconde structure latérale (5) sont configurées pour, en utilisation, s'étendre à partir d'une largeur minimale.

4. Dispositif de compression selon la revendication 3, dans lequel la première structure latérale (4) et la seconde structure latérale (5) se comportent comme des structures à raideur nulle lorsque leur largeur est comprise entre la largeur minimale et la largeur maximale.

5. Dispositif de compression selon l'une quelconque des revendications précédentes, dans lequel les éléments déformables (7) reliant un élément structurel allongé (6) à un autre élément structurel allongé (6) sont disposés parallèlement les uns aux autres.

6. Dispositif de compression selon l'une quelconque des revendications précédentes, dans lequel la première structure latérale (4) et la seconde structure latérale (5) présentent une partie inférieure (42), une partie centrale (43) et une partie supérieure (44), et comprennent
- au moins un ensemble formé par un élément structurel allongé supérieur (61) situé dans la partie supérieure (44) et un élément structurel allongé inférieur (62) situé dans la partie inférieure (42) au-dessous dudit élément structurel allongé supérieur (61), et
- au moins un élément structurel allongé central (63) situé dans la partie centrale (43),
l'élément structurel allongé supérieur (61) de l'ensemble étant relié à l'élément structurel allongé central (63), et l'élément structurel allongé inférieur (62) de l'ensemble étant relié à l'élément structurel allongé central (63).

7. Dispositif de compression selon la revendication 6, dans lequel la première structure latérale (4) et la seconde structure latérale (5) comprennent un premier ensemble relié au premier plateau de pression (2), et un second ensemble relié au second plateau de pression (3).

8. Dispositif de compression selon la revendication 7, dans lequel la première structure latérale (4) et la seconde structure latérale (5) comprennent un élément structurel allongé central (63) relié au premier et au second ensemble.

9. Dispositif de compression selon la revendication 6, dans lequel la première structure latérale (4) et la seconde structure latérale (5) comprennent un premier élément structurel allongé central (63) relié au premier plateau de pression (2), et un second élément structurel allongé central (63) relié au second plateau de pression (3).

10. Dispositif de compression selon la revendication 9, dans lequel la première structure latérale (4) et la seconde structure latérale (5) comprennent un ensemble relié au premier et au second élément structurel allongé central (63), l'ensemble comprenant de préférence une traverse (9) reliée à l'élément structurel allongé supérieur (61) et à l'élément structurel allongé inférieur (62), disposée perpendiculairement à ces deux éléments et au milieu de l'ensemble.

11. Dispositif de compression selon l'une quelconque des revendications 6 à 10, dans lequel l'épaisseur de l'au moins un élément structurel allongé central (63) est supérieure ou égale à l'épaisseur de l'élément structurel allongé supérieur (61) et de l'élément structurel allongé inférieur (62) de l'au moins un ensemble.

12. Dispositif de compression selon l'une quelconque des revendications 6 à 11, dans lequel l'au moins un élément structurel allongé central (63) est disposé à équidistance entre l'élément structurel allongé supérieur (61) et l'élément structurel allongé inférieur (62) de l'au moins un ensemble.

13. Batterie comprenant un empilement de cellules de batterie (10) et un dispositif de compression (1) selon l'une quelconque des revendications précédentes.
